# EUROPEAN PATENT APPLICATION

(11) **EP 1 601 166 A1**
(43) Date of publication of application: **30.11.2005**
(21) Application number: 05002977.6
(22) Date of filing: 11.02.2005
(51) Int. Cl.: H04M 1/02

(54) **Sliding-type portable communication device having two liquid crystal displays**

(30) Priority: 28.05.2004 KR 2004038585
(71) Applicant: SAMSUNG ELECTRONICS CO., LTD., Suwon-si, Gyeonggi-do (KR)
(72) Inventor: Lee, Min-Hyouk c/o Samsung Electronics Co., Ltd., Suwon-si Gyeonggi-do (KR)
(74) Representative: Grünecker, Kinkeldey, Stockmair & Schwanhäusser Anwaltssozietät

(57) **Abstract**

Disclosed is a sliding-type portable communication device having a dual liquid crystal display (LCD) including a first LCD (3b) and a second LCD (300), mounted on a front surface and a back surface of a sliding body, respectively. The sliding-type portable communication device includes a main body (2) and a sliding body (3), which is slidably mounted to the main body, and further includes a first LCD mounted on a front surface of the sliding body, the first LCD being exposed to the outside at all times; and a second LCD mounted on a back surface of the sliding body, the second LCD being exposed to the outside when the sliding body is slid from the main body in a longitudinal direction. The portable communication device has a camera lens mounted on a back surface of the main body.

## Description

The present invention relates to a sliding-type portable communication device, and more particularly to a sliding-type portable communication device having a dual liquid crystal display (LCD) including of a first LCD and a second LCD, mounted on a front surface and a back surface of a sliding body, respectively.

In general, a "portable communication device" refers to a device which a user can carry to perform wireless communication with a desired partner. Such portable communication devices may be classified into various types according to their appearance, such as bar-type portable communication devices, flip-type portable communication devices, and folder-type portable communication devices. The bar-type portable communication device has a single housing shaped like a bar. The flip-type portable communication device has a flip pivotably mounted to a bar-shaped housing by a hinge unit. The folder-type portable communication device has a folder coupled to a single bar-shaped housing by a hinge unit in such a manner that the folder can be rotated to fold to or unfold from the housing.

Additionally, portable communication devices may be classified into rotation-type communication terminals and sliding-type communication terminals according the manner of opening and closing the communication device. In the rotation-type portable communication terminal, two housings are coupled to each other in such a manner that one housing rotates to open or close relative to the other, while facing each other. In the sliding-type portable communication terminal, two housings are coupled to each other in such a manner that one housing slides in the longitudinal direction to open or close relative to the other while facing each other. These variously classified portable communication terminals are readily understood by those skilled in the art.

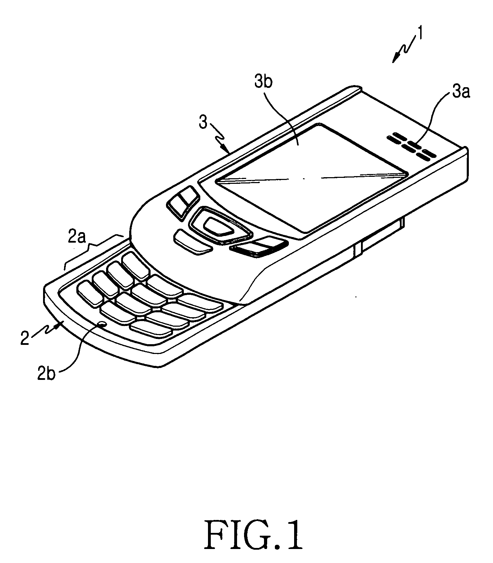

As shown in FIG. 1, a sliding-type portable communication device 1 comprises a main body 2 having multiple keypads 2a and a microphone unit 2b. The sliding-type portable communication device 1 may include a sliding body 3, which slides in the longitudinal direction to about one half of the entire length of the main body 2 to open or close relative to the main body 2. In general, keypads 2a of a 3x4 array type may be mounted on the main body 2, and a speaker unit 3a. A liquid crystal display (LCD) module 3b for providing display functions may be mounted on a front surface of the sliding body 3.

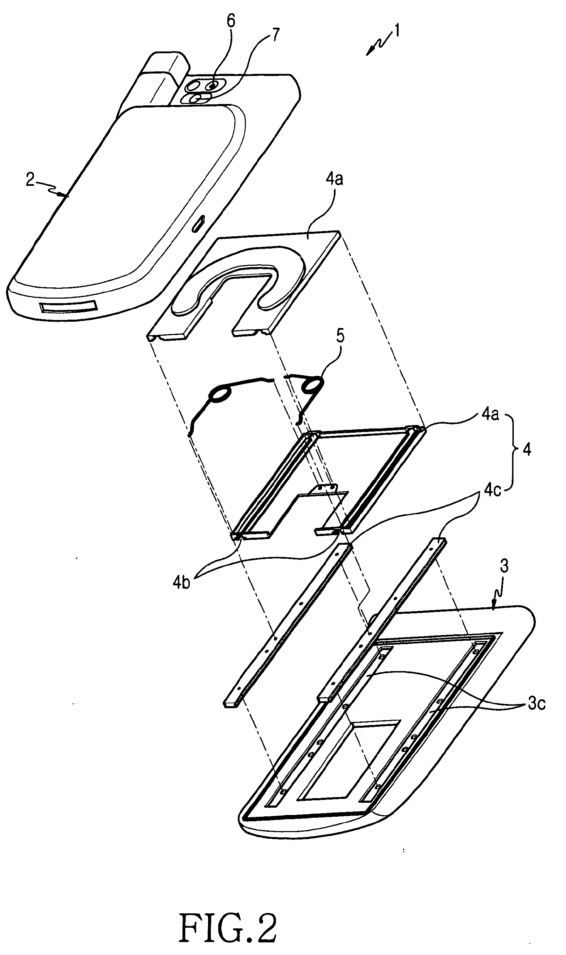

As shown in FIG. 2, a conventional sliding-type portable communication device 1 typically includes a main body 2; a sliding body 3, which slides in the longitudinal direction on the main body 2; a guide 4 disposed in the main body 2 and the sliding body 3 for guiding the sliding body 3 on the main body 2; and at least one drive spring 5 disposed between the sliding body 3 and the main body 2 for providing elastic force causing the sliding body 3 to slide upwardly and downwardly. Additionally, on a back surface of the main body 2, a coupling groove (not shown) is formed and a sliding plate 4a is provided for coupling with the coupling groove.

The guide 4 includes the sliding plate 4a having guide grooves 4b at both sides thereof and a pair of sliding guide bars 4c coupled with the guide grooves 4b, wherein the sliding guide bars 4c are also coupled with a guide slot 3c formed on the back surface of the sliding body 3.

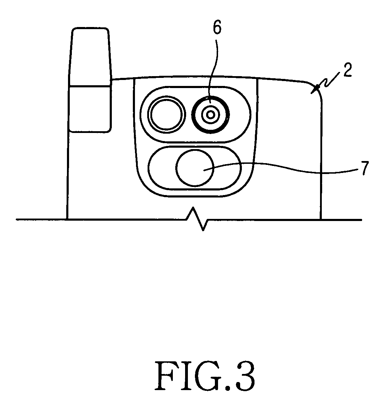

Further, as shown in FIG. 3, the sliding-type portable communication device may include a camera lens module 6 and a mirror 7 to photograph a subject.

However, when a user wants to take a photograph of himself/herself through the camera lens module mounted on the main body of the aforementioned sliding-type portable communication terminal, the user must turn the terminal so that the camera lens faces the user. Therefore, the user cannot see the image of himself/herself on the said LCD module, and thus cannot adjust the focus of the camera lens module correctly. Moreover, the user must turn the sliding body or the camera lens module in order to see an image of the subject to be photographed, thereby causing inconvenience in use of the terminal.

Additionally, in order to solve these problems, it is known in the art that a mirror may be attached around the camera lens module. However, the mirror used for this purpose is too small. Moreover, when a user takes a photograph, a convex or a concave type mirror may cause deviation from a real subject, thus causing the user to not correctly photograph the subject.

Further, when a user takes a photograph through a mirror at night, there is an additional problem that the user cannot see any subjects in the dark.

Accordingly, the present invention has been made to solve the above-mentioned problems occurring in the prior art.

The object of the present invention is to provide a sliding-type portable communication device having a dual liquid crystal display (LCD) including a first LCD and a second LCD, mounted on a front surface and a back surface of a sliding body, respectively, to facilitate the use of the portable terminal device.

This object is solved by the subject matter of the independent claims.

Preferred embodiments are defined in the dependent claims.

An aspect of the present invention is to provide a sliding-type portable communication device having a dual liquid crystal display (LCD) including of a first LCD and a second LCD, mounted on a front surface and a back surface of a sliding body, respectively, to facilitate the use of a camera lens mounted on the portable terminal device.

In order to accomplish the above, there is provided a sliding-type portable communication device including a main body and a sliding body that is slidably mounted to the main body, wherein the device further includes a first LCD mounted on a front surface of the sliding body, the first LCD being exposed to the exterior at all times; and a second LCD mounted on a back surface of the sliding body, the second LCD being exposed to the exterior when the sliding body is slid from the main body in the longitudinal direction to open the device.

The above features and advantages of the present invention will be more apparent from the following detailed description taken in conjunction with the accompanying drawings, in which:
FIG. 1 is a perspective view showing a conventional sliding-type portable communication device after sliding a sliding body;
FIG. 2 is an exploded perspective view of a conventional sliding-type portable communication device;
FIG. 3 is a view of a camera lens module and a mirror of a conventional sliding-type portable communication device;
FIG. 4 is an exploded perspective view of a sliding-type portable communication device according to a preferred embodiment of the present invention;
FIG. 5 is a perspective view showing a sliding-type portable communication device according to a preferred embodiment of the present invention, before sliding a sliding body completely open;
FIG. 6 is a perspective view of a sliding-type portable communication device according to a preferred embodiment of the present invention, in which a second LCD is exposed to the exterior after sliding a sliding body open; and
FIG. 7 is a sectional view taken along line A-A' in FIG. 6.

Hereinafter, preferred embodiments of the present invention will be described with reference to the accompanying drawings. In the following description, the same elements will be designated by the same reference numerals although they are shown in different drawings. Further, in the following description of the present invention, a detailed description of known functions and configurations incorporated herein is omitted to avoid making the subject matter of the present invention unclear.

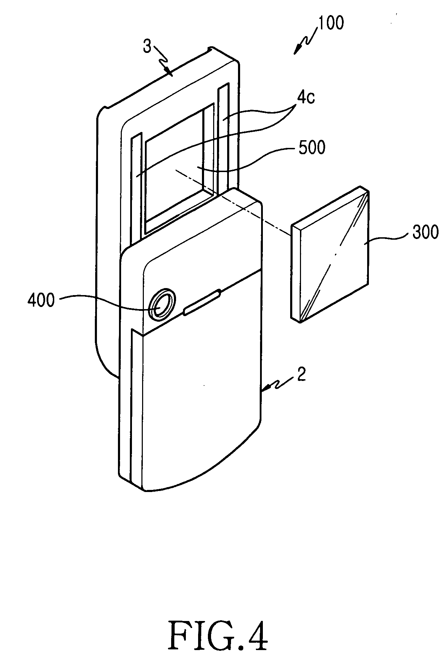

As shown in FIG. 4 to FIG. 7, a sliding-type portable communication device 100 having a dual LCD includes a main body 2, a sliding body 3, and first and second LCDs. Additionally, a camera lens module 400 is mounted on a back surface of the main body 2 at a desired position for the purpose of photographing an external subject. Further, the sliding body 3 is coupled to the main body 2 so that it may be slid in the longitudinal direction on the main body 2.

The first LCD 200 is mounted on a front surface of the sliding body 3 so that it may be exposed to the outside, at all times. On the other hand, the second LCD 300 is mounted on a back surface of the sliding body 3 so that it may be exposed to the outside when the sliding body 3 is slid open from the main body 2 in the longitudinal direction. Additionally, the first LCD 200 is formed of a main LCD, and the second LCD 300 is formed of a sub LCD.

Particularly, the main LCD is preferably formed as a large-size LCD.

The second LCD 300 is mounted in a groove 500 formed on the back surface of the sliding body 3. Additionally, the first LCD 200 is disposed in an opposite direction to the lens of the camera lens module 400 to facilitate photographing an external subject. On the other hand, the second LCD 300 is disposed in the same direction as the lens of the camera lens module 400 so that a user may take a photograph of himself/herself. The second LCD 300 preferably has a rectangular form. Additionally, the second LCD 300 is smaller than the first LCD 200.

Hereinafter, the operation of the aforementioned sliding-type portable communication device having a dual LCD according to a preferred embodiment of the present invention will be explained in detail with reference to FIG. 4 to FIG. 7.

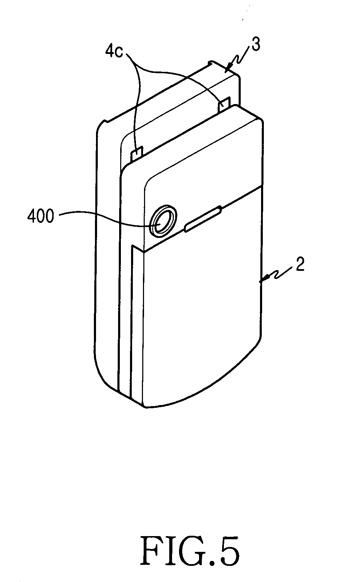

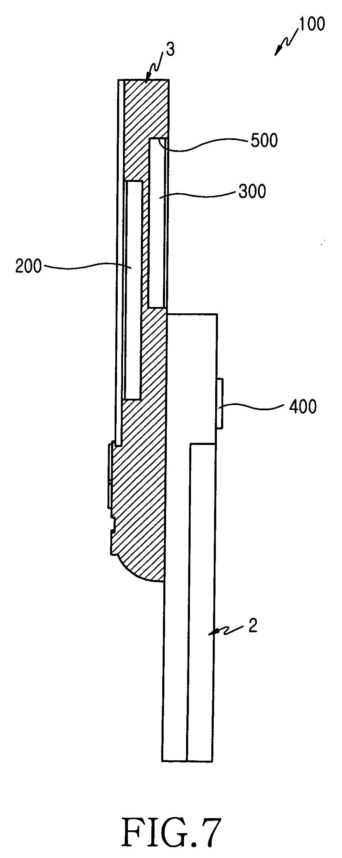

As shown in FIGs. 4 and 7, the sliding-type portable communication device having a dual LCD includes the first LCD 200 and the second LCD 300. As can be seen from FIG. 4 and FIG. 5, the camera lens module 400 is mounted on the back surface of the main body 2.

As shown in FIG. 7, the first LCD 200 is mounted on the front surface of the sliding body 3, and the first LCD 200 is exposed to the outside at all times. Therefore, the image of a subject photographed through the camera lens module 400 is conveniently displayed on the first LCD 200. By virtue of the first LCD 200, the user can see the photographed image.

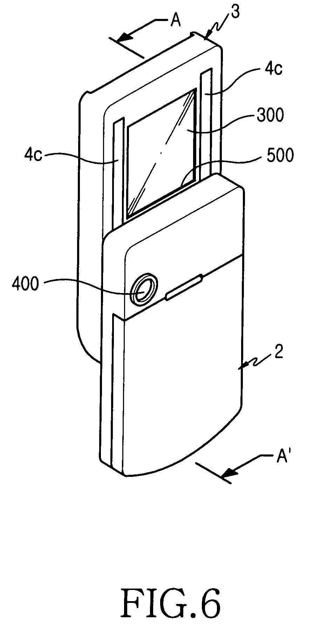

As shown in FIGs. 4 and 6, the sliding body 3 is slid from the main body 2 when a user wants to take a photograph of himself/herself. As configured, the second LCD 300 mounted on the back surface of the sliding body 3 is exposed to the outside. In this state, as shown in FIG. 6, when the user prepares to or takes a photograph of himself/herself through the lens of the camera module 400, his/her image can be conveniently displayed on the second LCD 300.

Additionally, as shown in FIGs. 4 and 6, the second LCD 300 is mounted in a groove 500 formed on the back surface of the sliding body 3. Further, as shown in FIG. 7, the second LCD 300 is smaller than the first LCD 200, and the second LCD 300 preferably takes the form, i.e. shape, of a rectangle with its longer side disposed in the longitudinal direction of relative sliding movement of the sliding body 3.

As described above, the first LCD and the second LCD, mounted on the front and the back surfaces of the sliding body 3 of the sliding-type portable communication device, respectively, can facilitate the use of the, portable terminal device.

Although the present invention is explained with reference to a preferred embodiment of a sliding-type portable communication device having a dual LCD hereinbefore, such a dual LCD may be applied to all types of portable communication devices or terminals.

While the invention has been shown and described by making reference to certain preferred embodiments thereof, it will be understood by those skilled in the art that various changes in form and details may be made therein without departing from the scope of the invention as defined by the appended claims.

## Claims

1. A sliding-type portable communication device having a dual LCD, a main body and a sliding body, which is slidably mounted to the main body, the device comprising:
a first LCD mounted on a front surface of the sliding body, the first LCD being exposed at all times; and
a second LCD mounted on a back surface of the sliding body, the second LCD being exposed when the device is opened by sliding the sliding body along the main body in a longitudinal direction.

2. The sliding-type portable communication device having a dual LCD as claimed in claim 1, wherein a camera lens module is mounted on a back surface of the main body.

3. The sliding-type portable communication device having a dual LCD as claimed in claim 1 or 2, wherein the first LCD is a main LCD and the second LCD is a sub LCD.

4. The sliding-type portable communication device having a dual LCD as claimed in one of claims 1 to 3, wherein the second LCD is mounted in a groove formed on a back surface the sliding body.

5. The sliding-type portable communication device having a dual LCD as claimed in claim 2, wherein the first LCD is disposed in an opposite direction to a lens of the camera lens module, and the second LCD is disposed in a same direction as the lens of the camera lens module.

6. The sliding-type portable communication device having a dual LCD as claimed in one of claims 1 to 5, wherein the second LCD has a rectangular shape.

7. The sliding-type portable communication device having a dual LCD as claimed in one of claims 1 to 6, wherein the second LCD is smaller than the first LCD.
